# EUROPÄISCHE PATENTSCHRIFT

(11) **EP 3 126 815 B1**
(45) Veröffentlichungstag und Bekanntmachung des Hinweises auf die Patenterteilung: **16.05.2018**
(21) Anmeldenummer: 15713166.5
(22) Anmeldetag: 25.03.2015
(51) Int. Cl.: G01N 3/20

(54) **ROTATIONSBIEGEPROOFVORRICHTUNG FÜR PLATTENFÖRMIGE SUBSTRATE AUS KERAMISCHEN ODER GLASIGEN BZW. GLASKERAMISCHEN WERKSTOFFEN**
ROTARY BEND TESTING DEVICE FOR PLATE-LIKE SUBSTRATES MADE OF CERAMIC OR GLASS OR GLASS-CERAMIC MATERIALS
MACHINE D'ESSAI DE FLEXION ROTATIVE POUR SUBSTRATS EN FORME DE PLAQUES EN MATÉRIAUX CÉRAMIQUES OU VITREUX OU VITROCÉRAMIQUES

(30) Priorität: 04.04.2014 DE 102014206504; 10.09.2014 DE 102014218130
(43) Veröffentlichungstag der Anmeldung: 08.02.2017
(73) Patentinhaber: CeramTec GmbH, 73207 Plochingen (DE)
(72) Erfinder: BETZ, Thomas, 92637 Weiden (DE)
(74) Vertreter: Fehrenbacher, Eckhard Anton
(86) Internationale Anmeldenummer: PCT/EP2015/056438
(87) Internationale Veröffentlichungsnummer: WO 2015/150193

(56) Entgegenhaltungen:
- DE-A1-102004 048 784
- GB-A- 2 187 293
- US-A- 5 178 017

## Beschreibung

Die Erfindung betrifft eine Rotationsbiegeproofvorrichtung für plattenförmige Substrate aus keramischen oder glaskeramischen Werkstoffen, wobei die zu prüfenden Substrate einer Biegung ausgesetzt werden.

Mit einem Prooftest kann eine Trennung von "guten" und "schlechten" bruchanfälligen Substraten vorgenommen werden. Substrate die beim Prooftest zerbrechen waren fehlerhaft und werden entsorgt. Substrate die den Prooftest heil überstehen, weisen keine Mängel auf und können im Prozess weiter verarbeitet oder bei Warenausgangsprüfung an den Kunden ausgeliefert werden.

DE 10 2004 048784 A1 als nächstliegender Stand der Technik zeigt eine Prüfvorrichtung zur Bestimmung der Festigkeit einer Scheibenprobe, wobei die zu prüfende Probe einer Biegung ausgesetzt wird, wobei
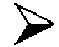 auf einer Montageplattform eine erste Rollenanordnung bestehend aus mindestens drei auf Wellen angeordnete Auflage-Rollen angeordnet ist, alle Auflage-Rollen auf derselben ersten Ebene auf einer ersten kreisförmigen Spur laufen
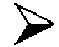 eine zweite Rollenanordnung bestehend aus mindestens drei auf Wellen angeordnete Druck-Rollen oberhalb oder unterhalb der ersten Rollenanordnung angeordnet ist, wobei alle Druck-Rollen auf derselben zweiten Ebene auf einer zweiten kreisförmigen Spur laufen
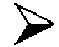 das Zentrum der ersten und der zweiten Spur auf einer ZentrumsGeraden senkrecht zu den beiden Ebenen angeordnet ist und die AuflageRollen zu den Druck-Rollen versetzt angeordnet sind, d.h. zwischen jeweils zwei Rollen einer Rollenanordnung eine Rolle der anderen Rollenanordnung angeordnet ist und
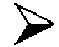 die zweite Rollenanordnung auf der Zentrums-Geraden verfahrbar ist

Eine ähnliche Prüfvorrichtung ist in GB 2 187 293 A. Hier wird die scheibenförmige Probe von Kugellagerkugeln in zwei Ringen verschiedener Durchmesser gehalten. Die Prüfkopf kann gegenüber dem Auflageblock gedreht werden, um die Reibung und Abnutzung der Kugeln zu verringern. Es werden dabei alle Bereiche der Probe belastet.

US 5 178 017 A zeigt allgemein eine Prüfvorrichtung zum Messen der Biegesteifigkeit von Proben von flexiblen Materialien wie Elastomeren und ähnlichen Polymeren. Die bevorzugte Form umfasst zwei Elemente, ein Ambosselement und ein Jochteil. Das Joch schließt ein Querstück und zwei Paare von abhängigen Beinen ein, die parallel, voneinander beabstandet, umgekehrt "V" s bilden. Rollen zwischen den Punkten auf den unteren Teilen der Beine, um die Testproben zu unterstützen. Das Ambosselement umfasst ein Querstück und ein einziges Paar von Armen, die eine Rolle zum Aufbringen einer nach unten gerichteten Last auf die Mitte der auf den Jochrollen gehaltenen Probe legen. Die Walzen erlauben es, dass die oberflächennahe Exemplare gleiten, anstatt in ihre Träger zu graben, und dies liefert eine genauere, wiederholbare Ablesung der auf die Proben aufgebrachten Biegekräfte.

Der Erfindung liegt die Aufgabe zugrunde, eine alternative Rotationsbiegeproofvorrichtung nach dem Oberbegriff des Anspruchs 1 so zu verbessern, dass in der Rotationsbiegeproofvorrichtung eine gleichzeitige Überprüfung sowohl der Ober- als auch der Unterseite des Substrats erfolgt, ohne dass das Substrat umgedreht werden müsste.

Erfindungsgemäß wird diese Aufgabe durch die Merkmale des Anspruchs 1 gelöst, d.h. dadurch,
a. dass auf einer Montageplattform eine erste Rollenanordnung bestehend aus mindestens drei auf Wellen angeordnete Auflage-Rollen angeordnet ist, alle Auflage-Rollen auf derselben ersten Ebene auf einer ersten kreisförmigen Spur laufen,
b. dass eine zweite Rollenanordnung bestehend aus mindestens drei auf Wellen angeordnete Druck-Rollen oberhalb oder unterhalb der ersten Rollenanordnung angeordnet ist, wobei alle Druck-Rollen auf derselben zweiten Ebene auf einer zweiten kreisförmigen Spur laufen,
c. dass das Zentrum der ersten und der zweiten Spur auf einer Zentrums-Geraden senkrecht zu den beiden Ebenen angeordnet sind und die Auflage-Rollen zu den Druck-Rollen versetzt angeordnet sind, d.h. zwischen jeweils zwei Rollen einer Rollenanordnung eine Rolle der anderen Rollenanordnung angeordnet ist,
d. alle Rollen von einer der beiden Rollenanordnungen über eine Antriebsvorrichtung gleich schnell angetrieben werden und
e. die zweite Rollenanordnung auf der Zentrums-Geraden verfahrbar ist.

Dadurch, dass die Rollenanordnungen übereinander angeordnet sind, sich das zu prüfende Substrat dazwischen befindet und die Auflage-Rollen zu den Druck-Rollen versetzt angeordnet sind, die Rollen einer der beiden Rollenanordnungen gleich schnell angetrieben werden und die zweite Rollenanordnung auf der Zentrums-Geraden verfahrbar ist, erfolgt eine Überprüfung beider Seiten des Substrats, ohne Umdrehen des Substrats in der Rotationsbiegeproofvorrichtung.

Bei der erfindungsgemäßen Proofmethode werden die Substrate einer bestimmten Biegung ausgesetzt. Dadurch entsteht auf der einen Seite des Substrats eine Stauchung der Oberfläche und auf der gegenüberliegenden Seite eine Dehnung. Da stoffbedingt die Zugbelastbarkeit von spröden keramischen oder glasigen Werkstoffen deutlich geringer ist als die Druckbelastbarkeit, kann über die Zugbelastbarkeitsprüfung bei der durchgeführten Biegeprüfung die Mindestbauteilfestigkeit bestimmt werden. Und da eine beanspruchte Oberfläche, insbesondere beim Vorhandensein von oberflächlichen Defekten, geringere Festigkeiten besitzt, kann durch die Vorrichtung eine Trennung von "guten" und "schlechten" bruchanfälligen Substraten vorgenommen werden. Substrate die dabei zerbrechen waren fehlerhaft und werden entsorgt. Substrate die diesen Prooftest heil überstehen, weisen keine Mängel auf und können im Prozess weiter verarbeitet oder bei Warenausgangsprüfung an den Kunden ausgeliefert werden.

Bevorzugt sind bei drei Rollen je Rollenanordnung die Rollen jeder Rollenanordnung um 120° versetzt zueinander angeordnet.

In einer Audführungsform der Erfindung ist die Antriebsvorrichtung ein Kegel-Stirnradgetriebe, wobei die Welle einer Rolle angetrieben wird und diese Welle einen Zahnkranz antreibt, der die Wellen der anderen Rollen antreibt. Hierdurch laufen alle Rollen gleich schnell.

Die angetriebene Welle kann mit einer von Hand zu betätigenden Spindel verbunden sein. Der Antrieb kann auch über einen Elektromotor oder anderes erfolgen.

Die Antriebsvorrichtung kann auch aus synchron angetriebenen Rollenantrieben bestehen.

Damit im Zentrum der Rollenanordnungen möglichst keine oder möglichst nur eine kleine Verbiegung des Substrats stattfindet ist auf jeder Welle zusätzlich zu der Auflage-Rolle oder der Druck-Rolle eine Dehnungsbegrenzungs-Rolle mit Abstand zur Auflage-Rolle oder Druck-Rolle angeordnet ist, wobei die Dehnungsbegrenzungs-Rolle sich näher am Zentrum der Rollenanordnungen, d.h. der Zentrums-Geraden befindet als die jeweilige benachbarte Auflage-Rolle oder Druck-Rolle und die Dehnungsbegrenzungs-Rolle einen kleineren Durchmesser aufweist als die Auflage-Rolle oder Druck-Rolle. Diese Dehnungsbegrenzungs-Rolle verhindert die Verbiegung im Zentrum der Rollenanordnungen.

In einer Ausführungsform sind die Laufflächen der Rollen konisch ausgebildet, wobei die Konen in Richtung zum Zentrum der Rollenbahnen hin abfallen. Auch hierdurch wird eine Verbiegung im Zentrum der Rollenanordnungen verringert.

Nachfolgend wird die Erfindung anhand von Figuren weiter erläutert.

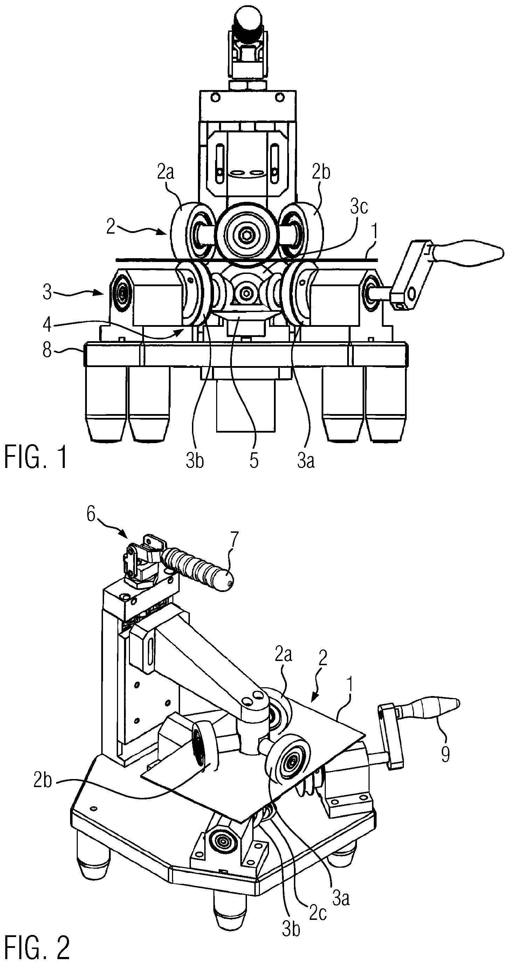

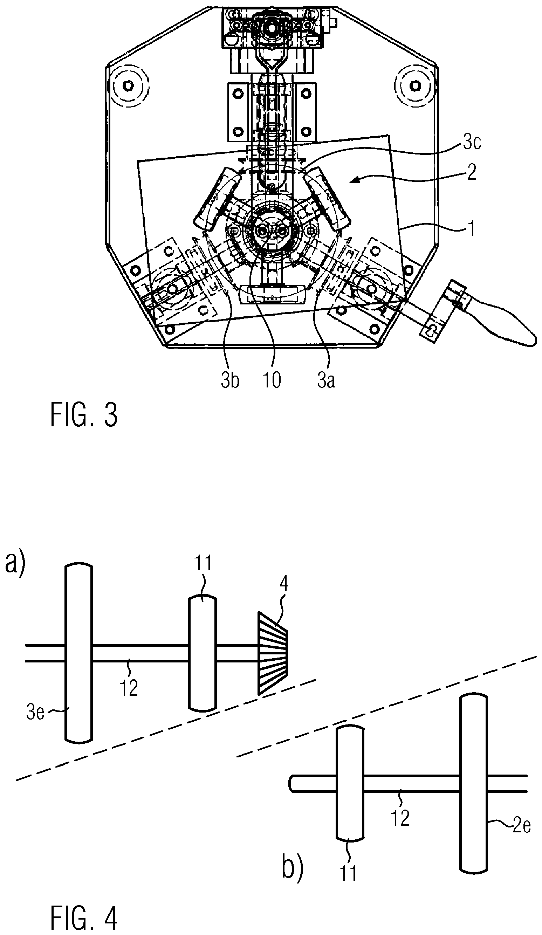

In den Figuren 1 und 2 ist jeweils eine Ansicht einer erfindungsgemäßen Rotationsbiegeproofvorrichtung gezeigt. Figur 3 zeigt eine Draufsicht von oben und Figur 4 Ansichten von Wellen mit zusätzlich einer Dehnungsbegrenzungs-Rolle.

Eine erste Rollenanordnung, nachfolgend Auflager 2 genannt, besteht aus drei Rollen 2a, 2b, 2c, die auf derselben kreisförmigen Rollenbahn laufen. Diese Rollenbahn bildet den Prüfkreis, d.h. beim Prooftest wird dieser Prüfkreis des Substrats 1 geprüft. Alle drei Rollen 2a, 2b, 2c des Auflagers 2 sind tangential zu diesem Prüfkreis angeordnet, laufen in einer Ebene und sind 120° zueinander versetzt angeordnet. Der Auflager 2 ist senkrecht zur Ebene des zu prüfenden Substrats 1 verfahrbar. Dieses Verfahren kann manuell, mechanisch, pneumatisch, motorgetrieben oder hydraulich erfolgen. Figur 2 zeigt mit dem Bezugszeichen 6 eine Spindel und einen Handgriff 7 mit der der Auflager 2 vertikal zur Ebene des Substrats 1 verstellt werden kann. Bevorzugt ist ein Hub, der die leichte Beladung und Entnahme des Substrats erlaubt und der bei dem Verbiegen des Substrats eine Biegeradius für das eingelegte Substrat erzeugt. Der maximale Verfahrweg ist auch abhängig von der Dicke des Substrats dem E-Modul des Materials und der gewünschten Prüfspannung, die sich aus der Dehnung des geprüften Substrats in der Endauslenkung ergibt.

Bei dünneren Substraten bzw. höheren Verfahrwegen ist dann auch eine Anpassung der Rollengröße hin zu kleineren Rollen sinnvoll.

Auf der zum Auflager 2 anderen Seite des zu prüfenden Substrats 1 ist eine zweite Rollenanordnung 3 angeordnet. Auch diese zweite Rollenanordnung 3 besteht aus drei Rollen 3a, 3b, 3c, die in einer Ebene und 120° zueinander versetzt angeordnet sind. Alle drei Rollen 3a, 3b, 3c dieser zweiten Rollenanordnung 3 werden angetrieben, wobei darauf zu achten ist, dass alle drei Rollen 3a, 3b, 3c gleich schnell laufen. Alternativ kann auch die verfahrbare Rollenbahn angetrieben sein. Bevorzugt läuft der Antrieb über ein Kegel-Stirnradgetriebe 4, d.h. die Welle einer Rolle 3a wird angetrieben, wobei diese Welle 3a einen Zahnkranz 5 antreibt, der die Wellen der anderen Rollen 3b, 3c antreibt. Das gleich schnelle Laufen könnte beispielsweise aber auch durch synchronisiert angetriebene Rollenantriebe oder auch anderweitig realisiert werden.

Wesentlich ist, dass die Rollen 2a, 2b, 2c des Auflagers 2 zu den Rollen 3a, 3b, 3c der zweiten Rollenanordnung 3 versetzt angeordnet sind, d.h. in Axialrichtung gesehen ist zwischen jeweils zwei Rollen einer Rollenanordnung eine Rolle der anderen Rollenanordnung angeordnet. In einer bevorzugten Ausführungsform sind die Rollen 2a, 2b, 2c des Auflagers 2 zu den Rollen 3a, 3b, 3c der zweiten Rollenanordnung 3 um 60° versetzt angeordnet.

Damit steht die eine Seite des Substrats (z.B. Oberseite direkt über einer unteren Prüfrolle) auf Zugbelastung und wird somit einer bestimmten Mindestbelastung ausgesetzt. Durch Drehung des Substrats erlebt jede Stelle des Substrats einmal auf der Ober- und auf der Unterseite diese Belastung, da bei der Position der oberen Belastungsrolle die Unterseite an dieser Stelle diese Zugbelastung erlebt.

Somit kann man mit einer Drehung des Substrats um 360° das Substrat an jeder Stelle 3x oben und 3x unten mit dieser Maximalspannung beaufschlagen. Bei einer Drehung um 60° erlebt jede Stelle somit einmal eine Belastung oben und einmal unten.

Bisherige Systeme nutzen entweder nur 2 x 2 Rollen (um 90° versetzt) als Gegenlager und es ergibt sich dann nur eine Biegung in einer Richtung. Um die andere Seite zu prüfen, muss man das Substrat entnehmen, umdrehen und erneut biegen.

Ein anderes Prüfsystem nutzt die Drehung nicht, was die Bereiche auf dem Substrat nicht mit der gleichen Biegebeanspruchung belastet.

Die Vorteile liegen in der möglichen Automatisierbarkeit (An und Wegtransport der zu prüfenden Substrate über ein Förderband; SPS-gesteuerter Ablauf der Biegung und Drehung) sowie dem Wegfall des Umdrehens der zu prüfenden Substrate und damit den niedrigeren Kosten für die Qualitätssicherung.

Damit die Rotationsbiegeproofvorrichtung alle Substrate 1 einer gleichen Verbiegung aussetzt und damit ein definiertes Dehnungsverhalten hat, sollte im Zentrum 10 der Rollenanordnungen möglichst keine oder möglichst nur eine kleine Verbiegung der Substrate 1 stattfinden.

In einer erfindungsgemäßen Ausführungsform sind daher von der zweiten Rollenanordnung 3 (siehe Figuren 4a, 4b) d.h. der unteren Rollenanordnung, auf jeder Welle 12 zwei mit Abstand zueinander angeordnete Rollen 11, 3e vorgesehen. Diese zwei Rollen 11, 3e unterscheiden sich in ihrem Durchmesser, wobei die sich näher am Zentrum 10 der Rollenanordnungen befindliche Dehnungsbegrenzungs-Rolle 11 einen kleineren Durchmesser hat als die äußere Rolle 3e. Figur 4a zeigt eine solche Rollenanordnung. Figur 2a zeigt mit dem Bezugszeichen 4 ein Teil eines Kegel-Stirnradgetriebes, mit dem die Welle 12 angetrieben wird.

Sind von der zweiten Rollenanordnung 3, d.h. der unteren Rollenanordnung, auf jeder Welle 12 zwei mit Abstand zueinander angeordnete Rollen 11, 3e vorgesehen, können die Rollen (2a, 2b, 2c, 2d) des Auflagers 2 wie die Rollen (3a, 3b, 3c, 3d) der unteren Rollenanordnung ausgebildet werden, d.h. auch zwei Rollen auf einer Achse, wobei auch diese zwei Rollen sich in ihrem Durchmesser unterscheiden, wobei die sich näher am Zentrum 10 der Rollenanordnungen befindliche Dehnungsbegrenzungs-Rolle 11 einen kleineren Durchmesser hat als die äußere Rolle 2e. Alternativ können aber auch nur jeweils eine Rolle auf jeder Welle angeordnet werden.

In einer weiteren erfindungsgemäßen Ausführungsform sind die Laufflächen der Rollen konisch ausgebildet, wobei die Konen in Richtung zum Zentrum 10 der Rollenbahnen hin abfallen. Auch hierdurch lässt sich die Verbiegung im Zentrum 10 der Rollenbahnen verringern.

Bevorzugt bestehen die plattenförmigen Substrate aus Zirkondioxid (ZrO₂).

## Patentansprüche

1. Rotationsbiegeproofvorrichtung für plattenförmige Substrate (1) aus keramischen oder glaskeramischen Werkstoffen, wobei die zu prüfenden Substrate (1) einer Biegung ausgesetzt werden, wodurch
a. auf einer Montageplattform (8) eine erste Rollenanordnung (3) bestehend aus mindestens drei auf Wellen angeordnete Auflage-Rollen (3a, 3b, 3c) angeordnet ist, alle Auflage-Rollen (3a, 3b, 3c) auf derselben ersten Ebene auf einer ersten kreisförmigen Spur laufen,
b. eine zweite Rollenanordnung (2) bestehend aus mindestens drei auf Wellen angeordnete Druck-Rollen (2a, 2b, 2c) oberhalb oder unterhalb der ersten Rollenanordnung (3) angeordnet ist, wobei alle Druck-Rollen (2a, 2b, 2c) auf derselben zweiten Ebene auf einer zweiten kreisförmigen Spur laufen,
c. das Zentrum (10) der ersten und der zweiten Spur auf einer Zentrums-Geraden senkrecht zu den beiden Ebenen angeordnet ist und die Auflage-Rollen (3a, 3b, 3c) zu den Druck-Rollen (2a, 2b, 2c) versetzt angeordnet sind, d.h. zwischen jeweils zwei Rollen einer Rollenanordnung eine Rolle der anderen Rollenanordnung angeordnet ist, und
d. die zweite Rollenanordnung (2) auf der Zentrums-Geraden verfahrbar ist,
**dadurch gekennzeichnet,**
e. **dass** alle Rollen von einer der beiden Rollenanordnungen über eine Antriebsvorrichtung gleich schnell angetrieben werden.

2. Rotationsbiegeproofvorrichtung nach Anspruch 1, **dadurch gekennzeichnet, dass** bei drei Rollen je Rollenanordnung (2, 3) die Rollen jeder Rollenanordnung (2, 3) um 120° versetzt zueinander angeordnet sind.

3. Rotationsbiegeproofvorrichtung nach Anspruch 1 oder 2, **dadurch gekennzeichnet, dass** die Antriebsvorrichtung ein Kegel-Stirnradgetriebe (4) ist, wobei die Welle einer Rolle (3a) angetrieben wird und diese Welle einen Zahnkranz (5) antreibt, der die Wellen der anderen Rollen (3b, 3c) antreibt.

4. Rotationsbiegeproofvorrichtung nach Anspruch 3, **dadurch gekennzeichnet, dass** die angetriebene Welle mit einer von Hand zu betätigenden Kurbel (9) verbunden ist.

5. Rotationsbiegeproofvorrichtung nach Anspruch 1 oder 2, **dadurch gekennzeichnet, dass** die Antriebsvorrichtung aus synchron angetriebenen Rollenantrieben besteht.

6. Rotationsbiegeproofvorrichtung nach einem der Ansprüche 1 bis 5, **dadurch gekennzeichnet, dass** auf jeder Welle zusätzlich zu der Auflage-Rolle (3a, 3b, 3c) oder der Druck-Rolle (2a, 2b, 2c) eine Dehnungsbegrenzungs-Rolle (11) mit Abstand zur Auflage-Rolle (3a, 3b, 3c) oder Druck-Rolle (2a, 2b, 2c) angeordnet ist, wobei die Dehnungsbegrenzungs-Rolle (11) sich näher am Zentrum (10) der Rollenanordnungen, d.h. der Zentrums-Geraden befindet als die jeweilige benachbarte Auflage-Rolle (3a, 3b, 3c) oder Druck-Rolle (2a, 2b, 2c) und die Dehnungsbegrenzungs-Rolle (11) einen kleineren Durchmesser aufweist als die Auflage-Rolle (3a, 3b, 3c) oder Druck-Rolle (2a, 2b, 2c).

7. Rotationsbiegeproofvorrichtung nach einem der Ansprüche 1 bis 6, **dadurch gekennzeichnet, dass** die Laufflächen der Rollen konisch ausgebildet sind, wobei die Konen in Richtung zum Zentrum (10) der Rollenbahnen hin abfallen.

## Claims

1. Rotary bending testing device for plate-like substrates (1) made of ceramic or glass ceramic materials, wherein the substrates (1) to be tested are subjected to bending, wherein
a. a first roller arrangement (3) consisting of at least three supporting rollers (3a, 3b, 3c) arranged on shafts is arranged on a mounting platform (8), all the supporting rollers (3a, 3b, 3c) run on a first circular track on the same first plane,
b. a second roller arrangement (2) consisting of at least three pressure rollers (2a, 2b, 2c) arranged on shafts is arranged above or below the first roller arrangement (3), wherein all the pressure rollers (2a, 2b, 2c) run on a second circular track on the same second plane,
c. the centre (10) of the first and the second track is arranged on a centre straight line perpendicular to the two planes and the supporting rollers (3a, 3b, 3c) are arranged in a manner offset with respect to the pressure rollers (2a, 2b, 2c), i.e. between in each case two rollers of one roller arrangement, a roller of the other roller arrangement is arranged, and
d. the second roller arrangement (2) is movable on the centre straight line, **characterized**
e. **in that** all the rollers of one of the two roller arrangements are driven at the same speed via a drive device.

2. Rotary bending testing device according to Claim 1, **characterized in that** in the case of three rollers per roller arrangement (2, 3), the rollers of each roller arrangement (2, 3) are arranged in a manner offset through 120° with respect to one another.

3. Rotary bending testing device according to Claim 1 or 2, **characterized in that** the drive device is a helical bevel gearbox (4), wherein the shaft of one roller (3a) is driven and this shaft drives a toothed ring (5) which drives the shafts of the other rollers (3b, 3c).

4. Rotary bending testing device according to Claim 3, **characterized in that** the driven shaft is connected to a hand-operated crank (9).

5. Rotary bending testing device according to Claim 1 or 2, **characterized in that** the drive device consists of synchronously driven roller drives.

6. Rotary bending testing device according to one of Claims 1 to 5, **characterized in that**, in addition to the supporting roller (3a, 3b, 3c) or the pressure roller (2a, 2b, 2c), an expansion limiting roller (11) is arranged on each shaft at a distance from the supporting roller (3a, 3b, 3c) or pressure roller (2a, 2b, 2c), wherein the expansion limiting roller (11) is located closer to the centre (10) of the roller arrangements, i.e. to the centre straight line, than the particular adjacent supporting roller (3a, 3b, 3c) or pressure roller (2a, 2b, 2c) and the expansion limiting roller (11) has a smaller diameter than the supporting roller (3a, 3b, 3c) or pressure roller (2a, 2b, 2c).

7. Rotary bending testing device according to one of Claims 1 to 6, **characterized in that** the running surfaces of the rollers are configured in a conical manner, wherein the cones drop in the direction of the centre (10) of the roller paths.

## Revendications

1. Dispositif de contrôle de flexion rotative pour des substrats en forme de plaques (1) en matériaux céramiques ou vitrocéramiques, les substrats à contrôler (1) étant soumis à une flexion,
a. un premier agencement de galets (3) constitué d'au moins trois galets de support (3a, 3b, 3c) disposés sur des arbres étant disposé sur une plate-forme de montage (8), tous les galets de support (3a, 3b, 3c) roulant sur le même premier plan sur une piste circulaire,
b. un second agencement de galets (2) constitué d'au moins trois galets de pression (2a, 2b, 2c) étant disposé sur des arbres au-dessus ou au-dessous du premier agencement de galets (3), tous les galets de pression (2a, 2b, 2c) roulant sur le même second plan sur une seconde piste circulaire,
c. le centre (10) de la première et de la seconde trace étant disposé sur une droite centrée perpendiculairement aux deux plans, et les galets de support (3a, 3b, 3c) étant décalés par rapport aux galets de pression (2a, 2b, 2c), c'est-à-dire qu'entre deux galets d'un agencement de galets est disposé, à chaque fois, un galet de l'autre agencement de galets, et
d. le second agencement de galets (2) étant déplaçable sur la droite centrée, **caractérisé en ce que**
e. tous les galets sont entraînés à la même vitesse par un des deux agencements de galets par l'intermédiaire d'un dispositif d'entraînement.

2. Dispositif de contrôle de flexion rotative selon la revendication 1, **caractérisé en ce qu'**en présence de trois galets par agencement de galets (2, 3), les galets de chaque agencement de galets (2, 3) sont disposés avec un décalage mutuel de 120°.

3. Dispositif de contrôle de flexion rotative selon la revendication 1 ou 2, **caractérisé en ce que** le dispositif d'entraînement est un engrenage à pignon conique (4), l'arbre d'un galet (3a) étant entraîné et cet arbre entraînant une couronne dentée (5) qui entraîne les arbres des autres galets (3b, 3c).

4. Dispositif de contrôle de flexion rotative selon la revendication 3, **caractérisé en ce que** l'arbre entraîné est relié à une manivelle (9) à actionner à la main.

5. Dispositif de contrôle de flexion rotative selon la revendication 1 ou 2, **caractérisé en ce que** le dispositif d'entraînement est constitué d'entraînements de galets entraînés de façon synchrone.

6. Dispositif de contrôle de flexion rotative selon une des revendications 1 à 5, **caractérisé en ce qu'**en plus du galet de support (3a, 3b, 3c) ou du galet de pression (2a, 2b, 2c) est disposé sur chaque arbre un galet de limitation d'extension (11) à distance du galet de support (3a, 3b, 3c) ou du galet de pression (2a, 2b, 2c), le galet de limitation d'extension (11) se trouvant plus près du centre (10) des agencements de galets, c'est-à-dire des droites centrées, que le galet de support (3a, 3b, 3c) ou le galet de pression (2a, 2b, 2c) voisin, et le galet de limitation d'extension (11) présente un diamètre inférieur à celui du galet de support (3a, 3b, 3c) ou du galet de pression (2a, 2b, 2c).

7. Dispositif de contrôle de flexion rotative selon une des revendications 1 à 6, **caractérisé en ce que** les surfaces de roulement des galets sont de forme conique, les cônes diminuant en direction du centre (10) des pistes de galets.
